# EUROPÄISCHE PATENTSCHRIFT

(11) **EP 2 627 920 B1**
(45) Veröffentlichungstag und Bekanntmachung des Hinweises auf die Patenterteilung: **04.03.2015**
(21) Anmeldenummer: 11764569.7
(22) Anmeldetag: 06.10.2011
(51) Int. Cl.: F16C 19/36, F16C 25/06, F16C 25/08

(54) **LAGERRING MIT HYDRAULISCHER VORSPANNEINRICHTUNG SOWIE LAGERANORDNUNG MIT EINEM DERARTIGEN LAGERRING**
BEARING RING WITH HYDRAULIC PRELOAD ARRANGEMENT AND BEARING ARRANGEMENT WITH SUCH A BEARING RING
BAGUE DE ROULEMENT AVEC DISPOSITIF DE PRÉCONTRAINTE HYDRAULIQUE ET ENSEMBLE PALIER AVEC UNE TELLE BAGUE DE ROULEMENT

(30) Priorität: 16.10.2010 DE 102010048728
(43) Veröffentlichungstag der Anmeldung: 21.08.2013
(73) Patentinhaber: Schaeffler Technologies AG & Co. KG, 91074 Herzogenaurach (DE)
(72) Erfinder: LUNZ, Erich, 91475 Lonnerstadt (DE)
(86) Internationale Anmeldenummer: PCT/EP2011/067426
(87) Internationale Veröffentlichungsnummer: WO 2012/049060

(56) Entgegenhaltungen:
- GB-A- 1 535 163
- US-A- 5 028 152
- US-A1- 2007 039 187

## Beschreibung

### Gebiet der Erfindung

Die Erfindung betrifft einen Lagerring nach Anspruch 1 sowie eine Lageranordnung nach Anspruch 6.

Aus dem Stand der Technik sind hydraulisch vorgespannte Lager grundsätzlich bekannt.

Eine Lageranordnung umfasst dabei einen Lagerring, mit dem eine fluidische, üblicherweise hydraulische Vorspanneinrichtung in der Weise zusammenwirkt, dass zwischen dem Lagerring und einem Gehäuse ein Fluid, üblicherweise ein Hydraulikfluid, vorgesehen ist, wobei das Fluid druckbeaufschlagt ist und eine Kraft auf die Stirnfläche des Lagerrings ausübt, die den Fluidraum begrenzt. Durch Betätigen der Vorspanneinrichtung, beispielsweise durch Erhöhen des Drucks in dem Fluid, lässt sich die Vorspannung erhöhen. Durch Erniedrigen des Drucks in dem Fluid lässt zwar der Druck auf die Stirnfläche des betreffenden Lagerrings nach, ein Nachlassen der Vorspannung setzt aber eine geringe Kraft entgegen der ursprünglichen Vorspannrichtung voraus, die im Betrieb beispielsweise durch ein Nachlassen der Reibkräfte zwischen dem Lagerring und dem Gehäuse und damit eher zeitverzögert und schwer ansteuerbar auftritt. Ein schnelles, gezieltes Umschalten zwischen einer hohen und einer geringen Vorspannung bzw. ein Umschalten der Richtung, in der die Vorspannung wirkt, ist kaum möglich. Ein möglicher Anwendungsfall für eine schnell umschaltbare Vorspannung ist beispielsweise bei der Ritzelwellenlagerung von Landmaschinen gegeben, wobei die Landmaschine für den Betrieb auf dem Acker ein stark vorgespanntes Lager erforderlich macht, für den Fall einer Fahrt bei hoher Geschwindigkeit aber ein nur gering vorgespanntes Lager erforderlich ist. In diesem Fall ist eine steuerbare Umschaltung der Vorspannung der Ritzelwellelagerung günstig.

DE 41 26 317 C2 beschreibt eine Lageranordnung mit zwei axial beabstandeten Lagern und als Vorspanneinrichtung eine mechanische Feder, die zwischen den Stirnflächen der jeweiligen Außenringe angeordnet ist. Zur Reduzierung der Vorspannung ist eine hydraulische Antriebseinrichtung vorgesehen, bei der ein Fluid außen auf die von der Feder nicht vorgespannte Stirnfläche eines der beiden Lager wirkt, so dass durch Betätigung des Fluids die Vorspannung der beiden Lager nur reduziert werden kann. Die Lageranordnung setzt mindestens zwei Lager voraus, damit sich die Feder abstützten kann. Weiter treten hohe Kräfte auf.

DE 695 08 203 T2 beschreibt eine Lageranordnung mit einem Lagerring und einer hydraulisch betätigbaren Vorspanneinrichtung, die eine Kolben-Zylinder-Einheit umfasst. Hierbei ist ein Kanal für das Hydraulikfluid vorgesehen, der einen Bypass geringeren Durchmessers aufweist, so dass eine unvermittelt auftretende Änderung des Fluiddrucks in dem Bypass einen hohen inneren Widerstand hervorruft und der Kolben auch in diesem Fall gleichmäßig bewegt werden kann.

EP 0 210 810 A2 beschreibt eine Lageranordnung mit einem Lagerring und einem außerhalb des Lagerrings angeordneten hydraulisch betätigbaren Kolben einer Vorspanneinrichtung. Der Kolben wirkt unmittelbar auf die Stirnfläche eines der beiden Lager, wobei jedes Lager einen Kolben aufweist. In diesem Fall lässt sich die Vorspannung zwar gezielt erhöhen, jedoch nicht kurzfristig schaltbar verringern. Ungünstig ist ferner, dass zwischen der Stirnfläche des Lagerrings und dem Gehäuse ein Bauraum für den Kolben der Vorspanneinrichtung vorgehalten werden muss, was in dem Gehäuse Dichtungen sowie eine Zuführleitung erforderlich macht.

DE 90 04 901 U1 beschreibt eine Lageranordnung mit einem Lagerring und einer hydraulisch betätigbaren Spannbuchse, die auf die Stirnfläche des Lagerrings wirkt. Die Spannbuchse ist außerhalb des Lagerrings angeordnet und erfordert einen entsprechend hohen Bauraum in dem Gehäuse.

### Aufgabe der Erfindung

Es ist die Aufgabe der Erfindung, eine Lageranordnung mit einer platzsparenden, schnell ansteuerbaren Vorspannvorrichtung anzugeben.

### Zusammenfassung der Erfindung

Diese Aufgabe wird erfindungsgemäß durch einen Lagerring nach Anspruch 1 gelöst durch einen in der ersten Stirnfläche aufgenommenen Kolben einer fluidischen Vorspanneinrichtung, insbesondere für eine Lageranordnung nach Anspruch 6.

Ist eine Lageranordnung nach Anspruch 6 vorgesehen, umfassend ein Lager mit einem Lagerring sowie einer auf eine erste Stirnfläche des Lagerrings wirkende erste fluidische Vorspanneinrichtung zur Einstellung einer LagerVorspannung, dass eine zweite fluidische Vorspanneinrichtung vorgesehen ist, die auf eine zweite Stirnfläche des Lagerrings in einer entgegengesetzten Richtung wirkt, bieten die beiden voneinander unabhängig betätigbaren Vorspanneinrichtungen die Möglichkeit, die Vorspannung in einer ersten Richtung durch Betätigen der ersten Vorspanneinrichtung zu erhöhen und durch Betätigen der zweiten Vorspanneinrichtung, die in einer zu der ersten Richtung entgegengesetzten Richtung wirkt, zu erniedrigen. Insbesondere ist die Vorspannung schnell schaltbar und kann bei Bedarf in ihrer Richtung umgekehrt werden. Die Vorspannung ist in beide Richtungen schnell einstellbar und leicht regelbar.

Die Lageranordnung umfasst dabei einen Lagerring nach Anspruch 1, bei dem in mindestens einer Stirnseite ein Kolben der ersten Vorspanneinrichtung aufgenommen ist, so dass sich die Vorspanneinrichtung platzsparend im wesentlichen vollständig in das Korpus des Lagerrings aufgenommen anordnen lässt.

Vorzugsweise ist hinsichtlich des Lagerrings vorgesehen, dass in der ersten Stirnfläche eine Ausnehmung angeordnet ist, und dass zwischen dem Kolben und einem Ausnehmungsgrund ein druckbeaufschlagtes Fluid einer Vorspanneinrichtung vorgesehen ist. Zuleitungen für das druckbeaufschlagte Fluid sind dabei als Bohrungen in dem Korpus des Lagerrings ausgebildet, die in die Ausnehmung münden. Insbesondere können mehrere Ausnehmungen durch eine gemeinsame Zuleitung mit dem Fluid versorgt werden, so dass mehrere Kolben den gleichen Anpressdruck ausüben.

Vorzugsweise ist vorgesehen, dass der Kolben mit dem an die Ausnehmung angrenzenden Abschnitt der Fläche der Stirnfläche des Lagerrings im wesentlichen bündig abschließt. Der Lagerring behält in diesem Falle seine standardisierten Abmessungen im wesentlichen bei und ist bauraumneutral.

Vorzugsweise ist vorgesehen, dass an dem Kolben ein Dichtmittel angeordnet ist. Das Dichtmittel kann als O-Ring ausgebildet sein, der eine Dichtung zwischen dem Kolben und dessen Führungsfläche, beispielsweise einer Wandung der Ausnehmung, ausbildet.

Vorzugsweise ist vorgesehen, dass an einer zweiten Stirnfläche des Korpus in einer zweiten Ausnehmung ein zweiter Kolben angeordnet ist. Die an den beiden Stirnflächen des Korpus des Lagerrings vorgesehenen mindestens zwei Kolben können zu zwei unabhängig voneinander betätigbaren Vorspanneinrichtungen gehören, so dass durch Betätigen der ersten Vorspanneinrichtung mit dem ersten Kolben die Vorspannung in einer ersten Richtung vergrößert wird und durch Betätigen der zweiten Vorspanneinrichtung mit dem zweiten Kolben eine Kraft in eine zweite, der ersten Richtung entgegengesetzte Richtung ausgeübt wird, die die von der ersten Vorspanneinrichtung eingestellte Vorspannung aufhebt bzw. vermindert.

Weitere Vorteile und Merkmale ergeben sich aus den abhängigen Ansprüchen sowie aus der folgenden Beschreibung eines bevorzugten Ausführungsbeispiels der Erfindung.

Die Erfindung wird im folgenden unter Bezugnahme auf die anliegende Zeichnung näher beschrieben und erläutert.

### Kurze Beschreibung der Zeichnung

- Fig. 1: zeigt ausschnittsweise eine teilweise geschnittene schematische Ansicht eines Ausführungsbeispiels eines erfindungsgemäßen Lagerrings in einem Ausführungsbeispiel einer erfindungsgemäßen Lagervorrichtung.

### Detaillierte Beschreibung der Zeichnung

Fig. 1 zeigt einen als Außenring ausgebildeten Lagerring 1 eines als Wälzlager ausgebildeten Lagers 2, insbesondere eines Kegelrollenlagers, das eine Ritzelwelle einer Antriebseinheit einer nicht weiter dargestellten Landmaschine drehbar lagert.

Der Lagerring 1 weist ein Korpus auf mit einer ersten Stirnfläche 3, die an einem ersten Abschnitt 4 eines Gehäuses 5 anliegt, und mit einer zweiten Stirnfläche 6, die an einem zweiten Abschnitt 7 des Gehäuses 5 anliegt. In der ersten Stirnfläche 3 des Korpus des Lagerrings 1 ist ein Kolben 8 einer ersten Vorspanneinrichtung angeordnet, wobei die erste Vorspanneinrichtung zur Einstellung einer Lagervorspannung auf die erste Stirnfläche 3 einwirkt.

Der Kolben 8 ist in einer in die erste Stirnfläche 3 angeordneten Ausnehmung 9 eingelassen angeordnet, wobei zwischen dem Kolben 8 und einem Ausnehmungsgrund 10 in Fluid, insbesondere ein Hydraulikfluid, der ersten Vorspanneinrichtung aufgenommen ist. Der Kolben 8 ist als Zylinder ausgebildet, wobei die Ausnehmung 9 einen im wesentlichen viereckigen Querschnitt aufweist. Der Kolben 8 ist in der Ausnehmung 9 vollständig aufgenommen und schließt mit dem an die Ausnehmung 9 angrenzenden Abschnitt der ersten Stirnfläche 3 im wesentlichen bündig ab.

An dem Kolben 8 ist ein Dichtmittel 11 angeordnet, das als O-Ring ausgebildet ist, wobei der O-Ring an einer Wandung 12 der Ausnehmung 9 dichtend anliegt und in einer umlaufenden Aufnahme 13 an dem Korpus des Kolbens 8 aufgenommen ist. Die erste Vorspanneinrichtung umfasst eine in dem Gehäuse 5 angeordnete Bohrung 18, die auch das Korpus des Lagerrings 1 abschnittsweise durchsetzt und in die erste Ausnehmung 9 mündet, als Zuleitung für das Hydraulikfluid.

Wird das in der Ausnehmung 9 angeordnete Hydraulikfluid mit Druck beaufschlagt, wird der Kolben 8 gegen den Abschnitt 4 des Gehäuses 5 gedrückt und der Lagerring 1 in Richtung des Pfeils 14 vorgespannt.

Der Lagerring 1 weist einen in der zweiten Stirnfläche 6 aufgenommenen Kolben 15 einer zweiten Vorspanneinrichtung auf. Der Kolben 15 ist in einer weiteren Ausnehmung 16 angeordnet, wobei zwischen dem Kolben 15 und einem Ausnehmungsgrund 17 ein Hydraulikfluid der zweiten Vorspanneinrichtung angeordnet ist. Der zweite Kolben 15 weist wie der erste Kolben 8 ein Dichtmittel 19 auf, das als O-Ring ausgebildet ist. Der zweite Kolben 15 schließt mit dem an die zweite Ausnehmung 16 angrenzenden Flächenabschnitt der zweiten Stirnfläche 6 im wesentlichen bündig ab.

Wird die zweite Vorspanneinrichtung betätigt, insbesondere der Druck auf das in der zweiten Ausnehmung 16 befindliche Hydraulikfluid erhöht, stützt sich der zweite Kolben 15 an dem zweiten Abschnitt 7 des Gehäuses 5 ab und übt auf den Lagerring eine Kraft aus, die im wesentlichen entgegengesetzt zu der Richtung des Pfeils 14 gerichtet ist. Durch Betätigen der zweiten Vorspanneinrichtung lässt sich damit eine mittels der ersten Vorspanneinrichtung zuvor eingestellte Vorspannung herabsetzen bzw. aufheben; insbesondere ist es auch möglich, die Richtung der Vorspannung umzukehren.

Die beiden Vorspanneinrichtungen sind unabhängig voneinander betätigbar, jedoch von einer übergeordneten Steuer-Regelungs-Einheit angesprochen, so dass die Vorspannung nach Betrag und Richtung einstellbar ist und beispielsweise in Abhängigkeit von der Geschwindigkeit des Landfahrzeugs eingestellt werden kann.

Bei dem vorstehend beschriebenen Ausführungsbeispiel waren die Kolben 8, 15 jeweils als zylindrische Körper ausgebildet und die Ausnehmungen 9, 16 als zylindrische Bohrungen. Es versteht sich, dass die Kolben auch als die Stirnflächen 3, 6 umlaufende Ringkolben und die Ausnehmungen als Nuten, speziell als Ringnuten, ausgebildet sein können.

Die Erfindung wurde vorstehend anhand eines Kegelrollenlagers beschrieben. Es versteht sich, dass das Lager 1 auch als Schrägkugellager ausgebildet sein kann.

### Bezugszeichenliste

- 1: Lagerring
- 2: Lager
- 3: erste Stirnfläche
- 4: erster Abschnitt des Gehäuses 5
- 5: Gehäuse
- 6: zweite Stirnfläche
- 7: zweiter Abschnitt des Gehäuses 5
- 8: Kolben
- 9: Ausnehmung
- 10: Ausnehmungsgrund
- 11: Dichtmittel
- 12: Wandung der Ausnehmung 9
- 13: Aufnahme
- 14: Richtung
- 15: (zweiter) Kolben
- 16: (zweite) Ausnehmung
- 17: (zweiter) Ausnehmungsgrund
- 18: Bohrung
- 19: (zweites) Dichtmittel

## Patentansprüche

1. Lagerring, umfassend einen Korpus mit einer Stirnfläche (3; 6), **gekennzeichnet durch** einen in der Stirnfläche (3; 6) des Korpus aufgenommenen Kolben (8; 15) einer fluidischen Vorspanneinrichtung.

2. Lagerring nach Anspruch 1, **dadurch gekennzeichnet, dass** in der Stirnfläche (3; 6) eine Ausnehmung (9; 16) angeordnet ist, und dass zwischen dem Kolben (8; 15) und einem Ausnehmungsgrund (10; 17) ein druckbeaufschlagtes Fluid vorgesehen ist.

3. Lagerring nach Anspruch 1 oder 2, **dadurch gekennzeichnet, dass** der Kolben (8; 15) mit dem an die Ausnehmung (9; 16) angrenzenden Abschnitt der Fläche der Stirnfläche (3; 6) im wesentlichen bündig abschließt.

4. Lagerring nach einem der Ansprüche1 bis 3, **dadurch gekennzeichnet, dass** an dem Kolben (8; 15) ein Dichtmittel (11; 19) angeordnet ist.

5. Lagerring nach einem der Ansprüche 1 bis 4, **dadurch gekennzeichnet, dass** an einer zweiten Stirnfläche (6) des Korpus in einer zweiten Ausnehmung (16) ein zweiter Kolben (15) angeordnet ist.

6. Lageranordnung, umfassend ein Lager (2) mit einem Lagerring (1) nach einem der Ansprüche 1 bis 5. sowie einer auf eine erste Stirnfläche (3) des Lagerrings (1) wirkende erste fluidische Vorspanneinrichtung zur Einstellung einer Lagervorspannung,
**gekennzeichnet durch** eine zweite fluidische Vorspanneinrichtung, die auf eine zweite Stirnfläche (6) des Lagerrings (1) in entgegengesetzter Richtung wirkt.

## Claims

1. Bearing ring, comprising a body with an end face (3; 6), **characterized by** a piston (8; 15), received in the end face (3; 6) of the body, of a fluidic prestressing device.

2. Bearing ring according to Claim 1, **characterized in that** a recess (9; 16) is arranged in the end face (3; 6), and **in that** a pressure-loaded fluid is provided between the piston (8; 15) and a recess bottom (10; 17).

3. Bearing ring according to Claim 1 or 2, **characterized in that** the piston (8; 15) terminates substantially flush with that section of the area of the end face (3; 6) which adjoins the recess (9; 16).

4. Bearing ring according to one of Claims 1 to 3, **characterized in that** a sealing means (11; 19) is arranged on the piston (8; 15).

5. Bearing ring according to one of Claims 1 to 4, **characterized in that** a second piston (15) is arranged in a second recess (16) on a second end face (6) of the body.

6. Bearing arrangement, comprising a bearing (2) with a bearing ring (1) according to one of Claims 1 to 5 and a first fluidic prestressing device which acts on a first end face (3) of the bearing ring (1) in order to set a bearing prestress, **characterized by** a second fluidic prestressing device which acts on a second end face (6) of the bearing ring (1) in the opposite direction.

## Revendications

1. Bague de roulement, comprenant un corps avec une surface frontale (3 ; 6), **caractérisée par** un piston (8 ; 15), logé dans la surface frontale (3 ; 6) du corps, d'un dispositif de précontrainte fluidique.

2. Bague de roulement selon la revendication 1, **caractérisée en ce qu'**un évidement (9 ; 16) est disposé dans la surface frontale (3 ; 6) et qu'un fluide mis sous pression est prévu entre le piston (8 ; 15) et une base d'évidement (10 ; 17).

3. Bague de roulement selon la revendication 1 ou 2, **caractérisée en ce que** le piston (8 ; 15) se termine pour l'essentiel en affleurement avec la section, connexe à l'évidement (9 ; 16), de la surface de la surface frontale (3 ; 6).

4. Bague de roulement selon l'une quelconque des revendications 1 à 3, **caractérisée en ce qu'**un moyen d'étanchéification (11 ; 19) est disposé au niveau du piston (8 ; 15).

5. Bague de roulement selon l'une quelconque des revendications 1 à 4, **caractérisée en ce qu'**un deuxième piston (15) est disposé au niveau d'une deuxième surface frontale (6) du corps, dans un deuxième évidemment (16).

6. Agencement de roulement, comprenant un palier de roulement (2) doté d'une bague de roulement (1) selon l'une quelconque des revendications 1 à 5, ainsi que d'un premier dispositif de précontrainte fluidique agissant sur une première surface frontale (3) de la bague de roulement (1) en vue de régler la précontrainte de palier de roulement, **caractérisé par** la présence d'un deuxième dispositif de précontrainte fluidique agissant sur une deuxième surface frontale (6) de la bague de roulement (1) dans une direction opposée.
